# EUROPÄISCHE PATENTSCHRIFT

(11) **EP 0 544 223 B1**
(45) Veröffentlichungstag und Bekanntmachung des Hinweises auf die Patenterteilung: **23.04.1997**
(21) Anmeldenummer: 92119977.4
(22) Anmeldetag: 24.11.1992
(51) Int. Cl.: H02K 7/102, F16D 66/02, F16D 59/02

(54) **Elektromotor mit beim Abschalten des Motors selbsttätig wirkender Bremse**
Electric motor with a brake acting automatically at the disconnection of the motor
Moteur électrique équipé d'un frein à action automatique à la déconnexion du moteur

(30) Priorität: 26.11.1991 DE 4138703
(43) Veröffentlichungstag der Anmeldung: 02.06.1993
(73) Patentinhaber: FHP Motors GmbH, 26133 Oldenburg (DE)
(72) Erfinder: Patzelt, Siegfried, W-2900 Oldenburg (DE)
(74) Vertreter: Zangs, Rainer E., Dipl.-Ing.

(56) Entgegenhaltungen:
- EP-A- 0 006 388
- EP-A- 0 505 703
- DE-A- 3 935 968
- FR-A- 2 390 037

## Beschreibung

Die Erfindung betrifft einen Elektromotor mit beim Abschalten des Motors selbsttätig wirkender Bremse gemäß der im Oberbegriff des Patentanspruchs 1 angegebenen Art.

Ein derartiger Elektromotor ist durch die DE-PS 34 07 731 bekannt. Die hierbei beim Bremsvorgang infolge des Zusamnenwirkens der Schrägflächen am Bremstopf und am Kurzschlußring bewirkte zusätzliche axiale Verschiebekraft (in axiale Schubbewegung umgesetzte Drehbewegung) ist abhängig von der abzubremsenden Masse, dem Eingriffswinkel und dem Reibwert der aufeinander gleitenden Flächen. Bei relativ großen abzubremsenden Massen kann die axiale Verschiebekraft so groß werden, daß der Motor unmittelbar nach dem Einsetzen des Bremsvorganges blockiert.

Durch die in der DE 39 35 968 A1 bekannt gewordene Bremseinrichtung bei einem Elektromotor wird ein Blockieren der Bremse dadurch ausgeschlossen, daß die Bremsscheibe gegen eine Rückstellkraft axial relativ zum bremsseitigen Lagerschild verschiebbar an diesem gehalten ist. Dieser Elektromotor weist aber keinen Schutzschalter gegen ein Wiedereinschalten desselben während eines Bremsvorganges und/oder nach einem Verschleiß des Bremsbelages auf. Dieser Nachteil wird durch die DE 41 06 897 A1 (veröffentlicht am 10.09.92) dadurch vermieden, daß der Bremsscheibe ein am bremsseitigen Lagerschild angeordneter Schalter zugeordnet ist, der durch die Bremsscheibe bei deren Axialverschiebung während des Bremsvorganges in eine ein Wiedereinschalten des Motors verhindernde Schaltposition gebracht wird. Hierbei wird durch einen ersten Schutzschalter ein Wiedereinschalten während des Bremsvorganges verhindert, während das Wiedereinschalten des Elektromotors nach einem Verschleiß des Bremsbelages durch einen zweiten Schutzschalter unmöglich gemacht wird.

Durch die FR-A-2390037 ist ein Elektromotor mit beim Abschalten des Motors selbsttätig wirkender Bremse bekannt, welche einen ferromagnetischen, die Motorwelle zwischen Läuferblechpaket und Lagerschild umgebenden, vom in den Läufer eindringenden magnetischen Fluß des Motors axial entgegen einer Federkraft an den Läufer anziehbaren Anker aufweist. Dieser Anker ist gegen eine unverdrehbare Bremsscheibe preßbar, welche eine Betätigungsvorrichtung für einen am bremsseitigen Lagerschild angeordneten Schalter aufweist. Der Schalter wird durch die axialverschiebbare Betätigungsvorrichtung in eine ein Wiedereinschalten des Motors verhindernde Schaltposition gebracht.

Der Erfindung liegt nun die Aufgabe zugrunde, einen Elektromotor mit beim Abschalten des Motors selbsttätig wirkender Bremse zu schaffen, bei dem mit einfacheren Mitteln ein Wiedereinschalten des Elektromotors während eines Bremsvorganges und nach einem Verschleiß des Bremsbelages sicher verhindert wird. Diese Aufgabe wird durch die im Patentanspruch 1 gekennzeichnete Erfindung gelöst.

Bei dem erfindungsgemäßen Elektromotor wird ein Wiedereinschalten desselben während des Bremsvorganges und beim Erreichen der Verschleißgrenze der Bremsbelege mit nur einem Schutztschalter sicher verhindert. Hierbei zeichnet sich die Betätigungsvorrichtung für den Schutzschalter durch einfache und billig herzustellende Einzelteile aus.

Weitere vorteilhafte Ausgestaltungen des Erfindungsgegenstandes sind den weiteren Unteransprüchen zu entnehmen.

Die Erfindung wird anhand von Ausführungsbeispielen im folgenden näher erläutert. Es zeigt:
- Figur 1: einen Teil-Längsschnitt durch einen Elektromotor mit automatisch wirkender Bremse,
- Figur 2: eine Einzelheit aus Figur 1,
- Figur 3: eine zweite Ausfühungsform einer Betätigungseinrichtung für den Schutzschalter,
- Figur 4: eine Einzelheit aus Figur 3 in abgeänderter Form und
- Figur 5: eine weitere Betätigungseinrichtung für den Schutzschalter im Schnitt.

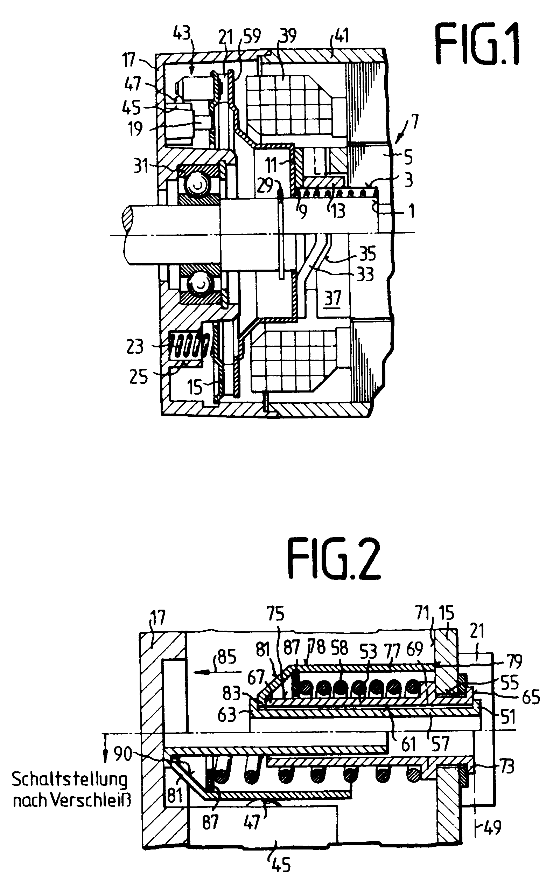

Wie aus Figur 1 ersichtlich ist, stützt sich am Grund 1 einer Ausdrehung 3 im Blechpaket 5 eines Kurzschlußläufers 7 eine Schraubenfeder 9 ab, die mit ihrem anderen Ende auf einen Bremstopf 11 einwirkt, mit dem ein Magnetanker 13 fest verbunden ist. Dieser Magnetanker 13 liegt beim Normalbetrieb des Elektromotors an der Stirnseite des Läuferpaketes 5 an. Dem Bremstopf 11 mit dem Magnetanker 13 ist eine Bremsscheibe 15 zugeordnet, die im Lagerschild 17 gehalten und mittels Stifte 19 geführt und gegen Verdrehung gesichert ist. Die Bremsscheibe 15 ist nach Art eines Bajonettverschlusses im Lagerschild montiert, axial verschiebbar und mit einem Bremsbelag oder mehreren Bremsbelägen 21 versehen. Diese Bremsbeläge 21 können gegebenenfalls auch am Bremstopf angebracht sein. Aus Unwuchtungen ist es jedoch zweckmäßiger, die Bremsbeläge 21 an der feststehenden Bremsscheibe 15 zu befestigen. Um ein Blockieren der Bremse zu vermeiden, sind der Bremsscheibe 15 Federn 23 zugeordnet, deren andere Enden sich am Boden von im Lagerschild 17 angebrachten Bohrungen 25 abstützen und welche ein Nachgeben der Bremsscheibe 15 in axialer Richtung ermöglichen. Der Verschiebeweg der Bremsscheibe 15 ist durch einen auf der Motorwelle 27 angebrachten Anschlagring 29 begrenzt. Die Motorwelle 27 ist im bremsseitigen Lagerschild 17 mittels eines Kugellagers 31 drehbar gelagert.

Außer dem Magnetanker 13 ist am Bremstopf 11 eine Keilscheibe 33 angebracht, die mit den Schrägflächen 35 im Kurzschlußring 37 des Läufers 7 in bekannter Weise zusammenwirkt. Der Bremstopf 11 mit dem Magnetanker 13 und der Keilscheibe 33 ist übrigens dem Konturenverlauf des Wickelkopfes 39 der Statorwicklung angepaßt. Der bremsseitge Lagerschild 17 ist in üblicher Weise in das Motorgehäuse 41 eingepaßt und mit diesem vereinigt.

Die Bremsscheibe 15 weist eine Betätigungsvorrichtung 43 für einen am bremsseitigen Lagerschild 17 angeordneten Schalter 45 mit einem Schalterknopf 47 auf, der durch die Betätigungsvorrichtung 43 bei deren Axialverschiebung in eine ein Wiedereinschalten des Elektromotors verhindernde Schaltposition gebracht wird. Ein Wiedereinschalten des Elektromotors während des Bremsvorganges kann dadurch ausgeschlossen werden, daß der Schalter 45 in der Bremslage der Bremsscheibe 15 den Steuerstromkreis für das Zu- und Abschalten des Elektromotors unterbricht, beispielsweise den Stromkreis der bzw. einer Relaispule. Es besteht auch die Möglichkeit, einen Schalter zu verwenden, der berührungslos ausgelöst wird, z. B. induktiv oder magnetisch.

Gemäß den Figuren 1 und 2 ist der Schalter 45 durch die Betätigungsvorrichtung 43 bei der Axialverschiebung der Bremsscheibe 15 nach derem in Eingriffbringen mit dem schiebenden als Bremselement ausgebildeten Bremstopf 11 in die ein Wiedereinschalten des Elektromotors verhindernde Schaltposition bringbar. Hierdurch ist ein Wiedereinschalten des Elektromotors während des Bremsvorganges nicht möglich.

Ein Wiedereinschalten des Elektromotors nach dem Verschleiß des Bremsbelages 21 wird dadurch verhindert, daß an der Bremsscheibe 15 ein bis an die Verschleißgrenze 49 des Bremsbelages 21 ragender Abschleifkopf 51 eines unter Federkraft stehenden Auslösegliedes der Betätigungsvorrichtung 43 angeordnet ist, nach dessem Abrieb das Auslöseglied zur Betätigung des Schalters 45 freigebbar ist, wodurch der Schalter 45 einen Stromkreis für eine Signalgabe und/oder für die Motorabschaltung schließt.

Gemäß Figur 2 besteht die Betätigungsvorrichtung 43 aus einer Führungshülse 53, welche mit einem Ende in einer Durchgangsöffnung 55 der Bremsscheibe 15 fest angeordnet ist und mit ihrem anderen freien Ende dem Lagerschild 17 zugewandt angeordnet ist, und einer in dieser Führungshülse 53 gelagerten und als Auslöseglied ausgebildeten Auslösehülse 57. Diese Auslösehülse 57 weist an ihrem dem Bremselement 11 zugewandten Ende den als Nietkopf ausgbildeten Abschleifkopf 51 auf, nach dessem Abrieb durch die Bremsfläche 59 des Bremselementes 11 die Auslösehülse 57 in der Führungshülse 53 mittels einer vorgespannten Feder 58 axial verschoben wird. Die Auslösehülse 57 besteht aus einem in eine Lagerbohrung 61 der Führungshülse 53 angeordneten Hohlniet, dessen Nietköpfe 51, 63 an den freien Stirnflächen 65, 67 der Führungshülse 53 fest anliegen. Die Führungshülse 53 ist auf der dem Lagerschild 17 zugewandten Seite der Bremsscheibe 15 mit einem konzentrisch zu der Durchgangsöffnung 55 gebildeten Lagerbund 69 gegen die Stirnfläche 71 der Bremsscheibe 15 mittels eines an dem freien Ende der Führungshülse 53 angeordneten Nietkopfes 73 preßbar angeordnet. Die Mantelfläche 75 der Führungshülse 53 ist von der Druckfeder 58 umgeben, von der sich ein Ende an dem Lagerbund 69 der Führungshülse 53 und das andere Ende an dem Nietkopf 63 der Auslösehülse 57 abstützt.

Die Druckfeder 58 wiederum ist von einer Schiebehülse 77 umgeben, welche an ihrem einen Ende mit einer hohlzylindrischen Stirnfläche 79 an der Stirnfläche 71 der Bremsscheibe 15 anliegt und welcher an ihrem anderen Ende eine von ihrer Mantelfläche 78 geneigt angeordnete Auslösefläche 81 aufweist. Diese Auslösefläche 81 geht an ihrem freien Ende in eine senkrecht zu der Verschieberichtung der Schiebehülse 77 ausgerichtete, ringförmige Anschlagfläche 83 für den Nietkopf 63 der Auslösehülse 57 über. Durch das Verschieben der Schiebehülse 77 in Pfeilrichtung 85 ist der Schalterknopf 47 des als Schnappschalters ausgebildeten Schalters 45 über die Auslösefläche 81 betätigbar. Die sich an dem Lagerbund 69 abstützende Druckfeder 58 stützt sich mit ihrem anderen Ende über eine ringförmige Druckplatte 87 gegen die konisch ausgebildete Innenfläche 90 der Schiebehülse 77 ab.

Durch die in den Figuren 1 und 2 dargestellte Betätigungsvorrichtung 43 wird ein Wiedereinschalten des Elektromotors sowohl während des Bremsvorganges als auch nach einem Verschleiß des Bremsbelages 21 mittels nur eines Schalters 45 sicher verhindert.

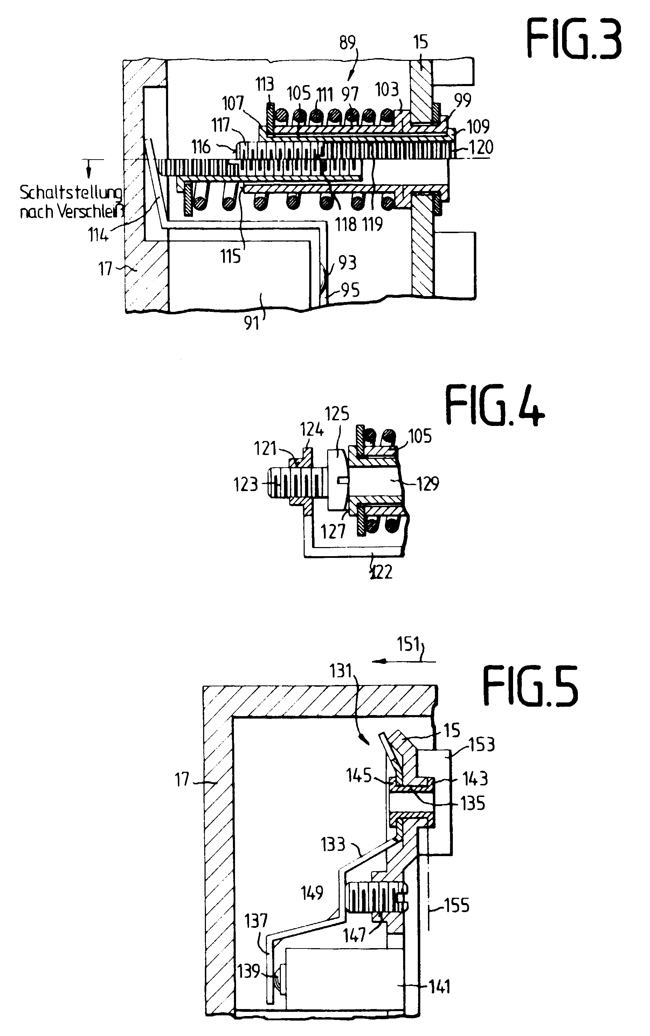

Die Figur 3 zeigt eine zweite Ausführungsform einer Betätigungseinrichtung 89 für einen Schalter 91, dessen Schalterknopf 93 über einen in dem Lagerschild 17 oder am Schalter schwenkbar gelagerten Auslösehebel 95 betätigt wird. Auch hierbei besteht die Betätigungsvorrichtung 89 aus einem Hülsen-Federmechanismus, welcher ebenfalls an die Bremsscheibe 15 wie bei der Ausführungsform nach der Figur 2 angenietet ist. Eine Führungshülse 97 ist mittels eines Nietkopfes 99 in einer Durchgangsöffnung 101 fest angeordnet, wobei die Führungshülse 97 mit einem Lagerbund 103 an der Bremsscheibe 15 anliegt. In diese Führungshülse 97 ist eine Auslösehülse 105 mit Nietköpfen 107, 109 eingenietet, wobei der Nietkopf 109 wieder als Abschleifkopf ausgebildet ist. Eine sich an dem Lagerbund 103 abstützende Druckfeder 111 stütz sich mit ihrem anderen Ende an einer ringförmigen Druckplatte 113 ab, welche zwischen der freien Stirnfläche 115 der Führungshülse 97 und dem Nietkopf 107 der Auslösehülse 105 als Zwischenstück angeordnet ist.

Der Schalterknopf 93 des Schalters 91 ist über einen in dem Lagerschild 17 oder am Schalter schwenkbar gelagerten Auslösehebel 95 mit einem Anschlagarm 114 betätigbar, welcher durch das freie Ende 116 einer in dem freien Ende der Auslösehülse 105 in einer Gewindebohrung 119 einstellbar gelagerten und aus dieser herausragenden Justierschraube 117 beaufschlagbar ist. Die Justierschraube 117 weist einen Schlitz 118 für einen Schraubendreher auf, der in die Öffnung 120 der Auslösehülse 105 steckbar ist. Hierdurch kann der Auslösezeitpunkt zum Ausschalten des Elektromotors genau eingestellt werden.

Im Rahmen der Erfindung kann der Schalterknopf 93 des Schalters 91 auch über einen in dem Lagerschild 17 oder am Schalter schwenkbar gelagerten Auslösehebel 122 betätigt werden, welcher an seinem abgewinkelten Ende 124 eine Gewindebohrung 121 für eine Justierschraube 123 aufweist, deren Schraubenkopf 125 durch die freie Stirnfläche 127 der Auslösehülse 105 beaufschlagbar ist. Auch hierbei ist mittels einer Durchgangsöffnung 129 in der Auslösehülse die Justierschraube 123 mittels eines Schraubendrehers einstellbar.

In Figur 5 ist eine weitere Betätigungsvorrichtung 131 dargestellt, deren Auslöseglied aus einem federnden Auslösehebel 133 besteht, welcher mittels eines Hohlnietes 135 an der Bremsscheibe 15 unter Vorspannung befestigt ist und andererseits mit seinem freien Ende 137 mit einem Schalterknopf 139 eines Schnappschalters 141 in federnder Verbindung steht. Der Hohlniet 135 weist zwei Nietköpfe 143, 145 auf, von denen der Nietknopf 143 wieder als Abschleifkopf dient. Dieser Auslösehebel 133 besteht aus einem abgewinkelten Federstahlblechteil, wobei die Vorspannung des auf den Schalterknopf 139 des Schnappschalters 141 einwirkenden freien Endes 137 des Auslösehebels 133 durch eine in der Bremsscheibe 15 in einer Gewindebohrung 147 verdrehbar gelagerte Justierschraube 149 einstellbar ist.

Im Rahmen der Erfindung ist hierbei auch der Einsatz eines Hebels aus nicht federndem Blech bzw. eines Hebels aus federndem Blech ohne sogenannte Vorspannung möglich, wobei dann aber zwischen Hebel und Bremsscheibe eine Druckfeder mit eingenietet werden muß. Bei dem Verschieben der Bremsscheibe 15 gemäß Figur 5 in Pfeilrichtung 151 wird über den Auslösehebel 133 der Schalterknopf 139 des Schalters 141 betätigt, wodurch ein Einschalten des Motors unterbrochen wird. Wenn andererseits die Bremsklötze 153 die Verschleißgrenze 155 erreichen, ist der Nietkopf 143 derart verschlissen, daß der unter Vorspannung stehende Auslösehebel 133 aus einer Ruhelage gezogen wird. Hierdurch verliert der Auslösehebel 133 seine justierte Position und somit seine Betätigungseigenschaft für den Schnappschalter. Ein Einschalten des Elektromotors ist nach dem Lösen des Auslösehebels 133 ebenfalls nicht mehr möglich. Auch diese Ausführungsform der Betätigungsvorrichtung 131 verhindert ein Wiedereinschalten des Elektromotors einerseits während des Bremsvorganges und andererseits nach dem Erreichen der Verschleißgrenze 155 mittels eines einzigen Schalters 141.

Alle dargestellten und beschriebenen Ausführungsbeispiele verhindern mit einfachen Mitteln und unter Einsatz eines einzigen Schutzschalters ein Wiedereinschalten des Elektromotors sowohl während des Bremsvorganges als auch nach dem Erreichen einer Verschleißgrenze des Bremsbelages.

In vorteilhafter Weise sind die Bremsklötze 21 an der unverdrehbaren Bremsscheibe 15 angeordnet. Hierbei können diese Bremsklötze 21 entweder zwischen den als Abschleifklöpfe ausgebildeten Nietköpfen an der Bremsscheibe 15 befestigt sein oder auch über die Nietköpfe gestülpt angeordnet sein.

## Patentansprüche

1. Elektromotor mit beim Abschalten des Motors selbsttätig wirkender Bremse, welche einen ferromagnetischen, die Motorwelle (27) zwischen Läuferblechpaket (5) und Lagerschild (17) umgehenden, vom in den Läufer eindringenden magnetischen Fluß des Motors axial entgegen einer Federkraft an den Läufer (7) anziehbaren Anker (13) aufweist, wobei ein mit dem Läufer drehbares Bremselement (11) gegen eine unverdrehbare Bremsscheibe preßbar ist, und wobei die Bremsscheibe (15) eine Betätigungsvorrichtung (43) für einen am bremsseitigen Lagerschild (17) angeordneten Schalter (45) aufweist, der durch die Betätigungsvorrichtung (43) bei deren Axialverschiebung in eine ein Wiedereinschalten des Motors verhindernde Schaltposition gebracht wird, dadurch gekennzeichnet, daß der Anker unmittelbar an einem axial auf der Welle geführten, mit dem Läufer drehbaren Bremselement befestigt ist, daß die Bremsscheibe ( 15 ) gegen eine Rückstellkraft axial relativ zum bremsseitigen Lagerschild verschiebbar ist und daß der Schalter (45) durch die Betätigungsvorrichtung (43) bei der Axialverschiebung der Bremsscheibe (15) nach derem in Eingriffbringen mit dein schiebenden Bremselement (11) in die ein Wiedereinschalten des Elektromotors verhindernde Schaltposition bringbar ist.

2. Elektromotor nach Anspruch 1, **dadurch gekennzeichnet**, daß an der Bremsscheibe (15) ein bis an die Verschleißgrenze (49) des Bremsbelages (21) lagernder Abschleifkopf (51) eines unter Federkraft stehenden Auslösegliedes der Betätigungsvorrichtung (43) angeordnet ist, nach dessem Antrieb das Auslöseglied zum Betätigen des Schalters (45) freigebbar ist, wodurch der Schalter (45) einen Stromkreis für eine Signalgabe und/oder für die Motorabschaltung schließt.

3. Elektromotor nach Anspruch 2, **dadurch gekennzeichnet**, daß die Betätigungsvorrichtung (43) aus einer Führungshülse (53), welche mit einem Ende in einer Durchgangsöffnung (55) der Bremsscheibe (15) fest angeordnet ist und mit ihrem anderen freien Ende dem Lagerschild (17) zugewandt angeordnet ist, und einer in dieser Führungshülse (53) gelagerten und als Auslöseglied ausgebildeten Auslösehülse (57) besteht, welche an ihrem dem Bremselement (11) zugewandten Ende einen Abschleifkopf (51) aufweist, nach dessem Abrieb durch die Bremsfläche (59) des Bremselementes (11) die Auslösehülse (57) in der Führungshülse (53) mittels einer vorgespannten Feder (58) axial verschiebbar ist.

4. Elektromotor nach Anspruch 3, **dadurch gekennzeichnet**, daß die Auslösehülse (57) aus einem in einer Lagerbohrung 61 der Führungshülse (53) angeordneten Hohlniet besteht, dessen Nietköpfe (51, 63) an den freien Stirnfläche (65, 67) der Führungshülse (53) fest anliegen und daß der dem verschiebbaren Bremselement (11) zugewandte Nietkopf (51) durch das Bremselement (11) abschleifbar ist.

5. Elektromotor nach Anspruch 4, **dadurch gekennzeichnet**, daß die Führungshülse (53) auf der dem Lagerschild (17) zugewandten Seite der Bremsscheibe (15) mit einem konzentrisch zu der Durchgangsöffnung (55) gebildeten Lagerbund (69) gegen die Bremsscheibe (15) mittels eines an dem freien Ende der Führungshülse (53) angeordneten Nietkopfes (73) preßbar angeordnet ist.

6. Elektromotor nach Anspruch 5, **dadurch gekennzeichnet**, daß die Mantelfläche (75) der Führungshülse (53) von einer Druckfeder (58) umgeben ist, von der sich ein Ende an dem Lagerbund (69) und das andere Ende an dem Nietkopf (63) der Auslösehülse (57) abstützt.

7. Elektromotor nach Anspruch 6, **dadurch gekennzeichnet**, daß die Druckfeder (58) von einer Schiebehülse (77) umgeben ist, welche an ihrem einen Ende mit einer hohlzylindrischen Stirnfläche (79) an der Bremsscheibe (15) anliegt und welche an ihrem anderen Ende eine von der Mantelfläche (78) geneigt ausgehende Auslösefläche (81) aufweist, daß die Auslösefläche (81) an ihrem freien Ende in eine senkrecht zu der Verschieberichtung der Schiebehülse (77) ausgerichtete ringförmige Anschlagfläche (83) für den Nietkopf (63) der Auslösehülse (57) übergeht und daß der Schalterknopf (47) des Schalters (45) durch die Auslösefläche (81) betätigbar ist.

8. Elektromotor nach Anspruch 7, **dadurch gekennzeichnet**, daß die sich an dem Lagerbund (69) abstützende Druckfeder (59) sich mit ihrem anderen Ende über eine ringförmige Druckplatte (87) gegen die konisch ausgebildete Innenfläche (89) der Schiebehülse (77) abstützt.

9. Elektromotor nach Anspruch 6, **dadurch gekennzeichnet**, daß die sich an dem Lagerbund (103) abstützende Druckfeder (111) sich mit ihrem anderen Ende an einer ringförmigen Druckplatte (113) abstützt, welche zwischen der freien Stirnfläche (115) der Führungshülse (97) und dem Nietkopf (107) der Auslösehülse (105) als Zwischenstück angeordnet ist.

10. Elektromotor nach Anspruch 9, **dadurch gekennzeichnet**, daß der Schalterknopf (93) des Schalters (91) über einen in dem Lagerschild (17) schwenkbar angeordneten Auslösehebel (95) betätigbar ist, welcher durch das freie Ende (116) einer in dem freien Ende der Auslösehülse (105) einstellbar gelagerten und aus dem freien Ende herausragenden Justierschraube (117) beaufschlagbar ist.

11. Elektromotor nach Anspruch 9, **dadurch gekennzeichnet**, daß der Schalterknopf (93) des Schalters (91) über einen in dem Lagerschild (17) schwenkbar gelagerten Auslösehebel (122) betätigbar ist, welcher in seinem abgewinkelten Ende (124) eine Gewindebohrung (121) für eine Justierschraube (123) aufweist, deren Schraubenkopf (125) durch die freie Stirnfläche (127) der Auslösehülse (105) beaufschlagbar ist.

12. Elektromotor nach Anspruch 2, **dadurch gekennzeichnet**, daß das Auslöseglied aus einem federnden Auslösehebel (133) besteht, der einerseits mittels eines Hohlnietes (135) an der Bremsscheibe (15) unter Vorspannung befestigt ist und andererseits mit seinem freien Ende (137) mit einem Schalterknopf (139) eines Schnappschalters (141) in federnder Verbindung steht.

13. Elektromotor nach Anspruch 12, **dadurch gekennzeichnet**, daß der Auslösehebel (133) aus einem abgewinkelten Federstahlblechteil besteht.

14. Elektromotor nach Anspruch 13, **dadurch gekennzeichnet,** daß die Vorspannung des auf den Schalterknopf (139) des Schnappschalters (141) einwirkenden freien Endes (137) des Auslösehebels (133) durch eine in der Bremsscheibe (15) in einer Gewindebohrung (147) verdrehbaren Justierschraube (149) einstellbar ist.

15. Elektromotor nach einem der vorhergehenden Ansprüche, **dadurch gekennzeichnet**, daß die Bremsklötze (21) an der unverdrehbaren Bremsscheibe (15) angeordnet sind.

16. Elektromotor nach Anspruch 15, **dadurch gekennzeichnet**, daß die als Abschleifköpfe ausgebildeten Nietköpfe von je einem Bremsklotz umgeben sind.

## Claims

1. Electric motor with a brake which acts automatically on switching the motor off and which has a ferromagnetic armature (13) surrounding the motor shaft (27) between the laminated core (5) of the rotor and the end plate (17) and capable of being attracted axially to the rotor (7) against a spring force by the magnetic flux of the motor penetrating into the rotor, wherein a braking element (11), which can rotate with the rotor, can be pressed against a non-rotatable brake disk and wherein the brake disk (15) has an actuating device (43) for a switch (45) which is arranged at the end plate (17) on the brake side and which is moved into a switching position preventing restarting of the motor by the actuating device (43) during axial displacement of the latter, characterised in that the armature is fastened directly to a braking element guided axially on the shaft and rotatable with the rotor, that the brake disk (15) is axially displaceable relative to the end plate on the brake side against a restoring force and that the switch (45) can be moved into the switching position preventing restarting of the electric motor by the actuating device (43) during the axial displacement of the brake disk (15) after the latter has been brought into engagement with the sliding braking element (11).

2. Electric motor according to Claim 1, characterised in that arranged on the brake disk (15) is an abrading head (51) of a spring force tensioned trigger element of the actuating device (43), which abrading head is in place up to the wear limit (49) of the brake lining (21), and after the actuation of which the trigger element can be released for the actuation of the switch (45), by which means the switch (45) closes a circuit for production of a signal and/or for switching off the motor.

3. Electric motor according to Claim 2, characterised in that the actuating device (43) consists of a guide bush (53), which is arranged rigidly by one end in a through opening (55) of the brake disk (15) and arranged with its other free end facing towards the end plate (17), and of a trigger bush (57) which mounted in this guide bush (53) and constructed as a trigger element has at its end facing towards the braking element (11) an abrading head (51) after the abrasion of which by the braking surface (59) of the braking element (11) the trigger bush (57) is axially displaceable in the guide bush (53) by means of a biased spring (58).

4. Electric motor according to Claim 3, characterised in that the trigger bush (57) consists of a hollow-type rivet which is arranged in a bearing bore (61) of the guide bush (53) and the rivet heads (51, 63) of which rest firmly against the free front face (65, 67) of the guide bush (53) and that the rivet head (51) facing towards the displaceable braking element (11) can be abraded by the braking element (11).

5. Electric motor according to Claim 4, characterised in that on the side of the brake disk (15) facing towards the end plate (17) the guide bush (53) is arranged compressibly with a bearing collar (69), formed concentrically with respect to the through opening (55), against the brake disk (15) by means of a rivet head (73) arranged at the free end of the guide bush (53).

6. Electric motor according to Claim 5, characterised in that the envelope surface (75) of the guide bush (53) is surrounded by a compression spring (58) of which one end is braced against the bearing collar (69) and the other end against the rivet head (63) of the trigger bush (57).

7. Electric motor according to Claim 6, characterised in that the compression spring (58) is surrounded by a sliding bush (77) which at one of its ends rests by a hollow cylindrical front face (79) against the brake disk (15) and which at its other end has a trigger surface (81) issuing obliquely from the envelope surface (78), that at its free end the trigger surface (81) merges into an annular limit stop surface (83) for the rivet head (63) of the trigger bush (57) oriented perpendicularly to the direction of displacement of the sliding bush (77) and that the switch button (47) of the switch (45) can be actuated by the trigger surface (81).

8. Electric motor according to Claim 7, characterised in that the compression spring (59) braced against the bearing collar (69) is supported by its other end through an annular pressure plate (87) against the conically constructed inner surface (89) of the sliding bush (77).

9. Electric motor according to Claim 6, characterised in that the compression spring (111) braced against the bearing collar (103) is supported by its other end against an annular pressure plate (113) which is arranged as an intermediate piece between the free front face (115) of the guide bush (97) and the rivet head (107) of the trigger bush (105).

10. Electric motor according to Claim 9, characterised in that the switch button (93) of the switch (91) can be actuated via a trigger lever (95) arranged pivotably in the end plate (17) which lever can be acted upon by the free end of an adjusting screw (117) mounted adjustably in the free end of the trigger bush (105) and projecting from the free end.

11. Electric motor according to Claim 9, characterised in that the switch button (93) of the switch (91) can be actuated via a trigger lever (122) mounted pivotably in the end plate (17), which lever in its angled end (124) has a threaded bore (121) for an adjusting screw (123), the screw head (125) of which can be acted upon by the free front surface (127) of the trigger bush (105).

12. Electric motor according to Claim 2, characterised in that the trigger element consists of a sprung trigger lever (133) which on the one hand is fastened with bias by means of a hollow-type rivet (135) to the brake disk (15) and on the other hand is connected in sprung manner by its free end (137) to a switch button (139) of a snap-action switch (141).

13. Electric motor according to Claim 12, characterised in that the trigger lever (133) consists of an angular spring steel sheet metal part.

14. Electric motor according to Claim 13, characterised in that the bias of the free end (137) of the trigger lever (133) acting on the switch button (139) of the snap-action switch (141) is adjustable by means of an adjusting screw (149) rotatable in a thread bore (147) in the brake disk (15).

15. Electric motor according to one of the preceding claims, characterised in that the brake blocks (21) are arranged on the non-rotatable brake disk (15).

16. Electric motor according to Claim 15, characterised in that the rivet heads constructed as abrading heads are each surrounded by a brake block.

## Revendications

1. Moteur électrique comprenant un frein automatique à l'arrêt du moteur, frein qui présente un induit ferromagnétique (13) qui entoure l'arbre (27) du moteur entre le paquet de tôle (5) du rotor et le flasque (17) et qui peut être attiré contre le rotor (7) par un flux magnétique du moteur et, ce, de manière axiale à l'encontre de la force d'un ressort, un élément de freinage (11) tournant avec le rotor pouvant être pressé contre un disque de frein non rotatif et le disque de frein (15) présentant un dispositif d'actionnement (43) pour un interrupteur (45) qui est disposé, côté frein, sur le flasque (17) et qui est mis en position de commande empêchant un ré-amorçage du moteur, par le dispositif d'actionnement (43) au moment du coulissement axial de ce dernier, caractérisé en ce que l'induit est fixé directement sur un élément de freinage qui tourne avec le rotor et est guidé axialement sur l'arbre, en ce que le disque de frein (15) est coulissant, à l'encontre d'une force de rappel, axialement par rapport au flasque côté frein et en ce que l'interrupteur (45) est amené, par le dispositif d'actionnement (43) au moment du coulissement axial du disque de frein (15) quand celui-ci entre en contact avec l'élément de freinage coulissant (11), dans la position de commande empêchant un ré-amorçage du moteur électrique.

2. Moteur électrique selon la revendication 1, caractérisé en ce que sur le disque de frein (15) est disposée une tête (51) d'un organe déclencheur du dispositif d'actionnement (43), cet organe subissant la force d'un ressort et la tête, usée par frottement, se logeant à la limite d'usure (49) du revêtement de frein (21) et à l'entraînement de laquelle l'organe déclencheur est libéré pour actionner l'interrupteur (45), interrupteur (45) qui ferme un circuit électrique pour l'émission d'un signal et/ou pour la coupure du moteur.

3. Moteur électrique selon la revendication 2, caractérisé en ce que le dispositif d'actionnement (43) se compose d'une douille de guidage (53) qui, par une extrémité, est disposée fixement dans une ouverture de passage (55) du disque de frein (15) et, par son autre extrémité, est tournée vers le flasque (17) et d'une douille de déclenchement (57) logée dans cette douille de guidage (53) et faisant office d'organe déclencheur, douille qui présente, à son extrémité tournée vers l'élément de freinage (11), une tête (51) usée par frottement après l'usure de laquelle par la surface de freinage (59) de l'élément de freinage (11), la douille de déclenchement (57) est coulissante axialement dans la douille de guidage (53) au moyen d'un ressort précontraint (58).

4. Moteur électrique selon la revendication 3, caractérisé en ce que la douille de déclenchement (57) se compose d'un rivet creux disposé dans un alésage de roulement (61) de la douille de guidage (53), dont les têtes de rivet (51, 63) s'appliquent fermement contre les surfaces avant libres (65, 67) de la douille de guidage (53) et en ce que la tête de rivet (51) tournée vers l'élement de freinage (11) coulissant peut être usée par le frottement de l'élément de freinage (11).

5. Moteur électrique selon la revendication 4, caractérisé en ce que sur le côté du disque de frein (15), tourné vers le flasque (17), la douille de guidage (53) peut être pressée, par une collerette d'appui (69) concentrique par rapport à l'ouverture de passage (55), contre le disque de frein (15) à l'aide d'une tête de rivet (73) disposée à l'extrémité libre de la douille de guidage (53).

6. Moteur électrique selon la revendication 5, caractérisé en ce que la surface d'enveloppe (75) de la douille de guidage (53) est entourée par un ressort de pression (58) dont une extrémité prend appui contre la collerette d'appui (69) et l'autre extrémité contre la tête de rivet (63) de la douille de déclenchement (57).

7. Moteur électrique selon la revendication 6, caractérisé en ce que le ressort de pression (58) est entouré d'une douille coulissante (77) qui, à l'une de ses extrémités, s'applique contre le disque de frein (15) par une surface avant creuse cylindrique (79) et, à son autre extrémité, présente une surface de déclenchement (81) s'étendant inclinée depuis la surface d'enveloppe (78), en ce que la surface de déclenchement (81), à son extrémité libre, se transforme en une surface annulaire de butée (83) perpendiculaire au sens de coulissement de la douille coulissante (77) pour la tête de rivet (63) de la douille de déclenchement (57) et en ce que la tête (47) de l'interrupteur (45) est actionnable par la surface de déclenchement.

8. Moteur électrique selon la revendication 7, caractérisé en ce que le ressort de pression (59) prenant appui contre la collerette d'appui (69) repose, à son autre extrémité, par une plaque de pression annulaire (87) contre la surface interne conique (83) de la douille coulissante (77).

9. Moteur électrique selon la revendication 6, caractérisé en ce que le ressort de pression (111), prenant appui contre la collerette d'appui (103), repose, à son autre extrémité, contre une plaque de pression annulaire (113) qui fait office de pièce intercalaire en étant disposée entre la surface avant libre (115) de la douille de guidage (97) et la tête de rivet (107) de la douille de déclenchement (105).

10. Moteur électrique selon la revendication 9, caractérisé en ce que la tête (93) de l'interrupteur (91) est actionnable au moyen d'un levier de déclenchement (95) disposé de manière pivotante dans le flasque (17), levier qui subit l'impact de l'extrémité libre (116) d'une vis d'ajustement (117) logée, de manière réglable, dans l'extrémité libre de la douille de déclenchement (105) et faisant saillie de cette extrémité libre.

11. Moteur électrique selon la revendication 9, caractérisé en ce que la tête (93) de l'interrupteur (91) est actionnable au moyen d'un levier de déclenchement (122) disposé de manière pivotante dans le flasque (17), levier qui présente, à son extrémité coudée (124), un alésage taraudé (121) pour une vis d'ajustement (123) dont la tête de vis (125) subit l'impact de la surface avant libre (127) de la douille de déclenchement (105).

12. Moteur électrique selon la revendication 2, caractérisé en ce que l'organe de déclenchement se compose d'un levier de déclenchement élastique (133) qui, d'une part, est fixé sous la précontrainte au moyen d'un rivet creux (135) contre le disque de frein (15) et, d'autre part, est relié par un ressort à son extrémité libre (137), à la tête (139) d'un interrupteur instantané (141).

13. Moteur électrique selon la revendication 12, caractérisé en ce que le levier de déclenchement (133) se compose d'une pièce coudée en tôle d'acier de ressort.

14. Moteur électrique selon la revendication 13, caractérisé en ce que la précontrainte de l'extrémité libre (137) du levier de déclenchement (133), qui agit sur la tête (139) de l'interrupteur instantané (141), est réglable par une vis d'ajustement (149) vissable dans un alésage taraudé (147) du disque de frein (15).

15. Moteur électrique selon l'une des revendications précédentes, caractérisé en ce que les plaquettes de frein (21) sont disposées sur le disque de frein (15) non rotatif.

16. Moteur électrique selon la revendication 15, caractérisé en ce que les têtes de rivet, faisant office de tête usée par frottement, sont entourées chacune d'une plaquette de frein.
